# EUROPEAN PATENT APPLICATION

(11) **EP 1 477 886 A1**
(43) Date of publication of application: **17.11.2004**
(21) Application number: 03101333.7
(22) Date of filing: 14.05.2003
(51) Int. Cl.: G06F 3/033

(54) **Wireless Input Device**

(71) Applicant: IEE INTERNATIONAL ELECTRONICS & ENGINEERING S.A., 6468 Echternach (LU)
(72) Inventor: SERBAN, Bogdan, 3376, Leudelange (LU); SCHOOS, Aloyse, 8094, Bertrange (LU)
(74) Representative: Beissel, Jean

(57) **Abstract**

A wireless input device assembly for a computer controlled system comprises an exciter/receiver unit associated with said computer controlled system, said exciter/receiver unit comprising an oscillator means for generating an excitation signal, at least one transmitting antenna connected to said oscillator means for receiving said excitation signal and for generating an electromagnetic field corresponding to said excitation signal, at least one receiving antenna for receiving an electromagnetic field, and decoding means connected to said receiving antenna for receiving and decoding a signal from said receiving antenna, and
an input device comprising at least one element for generating data to be inputted into said computer controlled system, and at least one resonator circuit associated to said at least one element, said resonator circuit for influencing an electromagnetic coupling between said transmitting antenna and said receiving antenna in accordance with data generated by said at least one element.

## Description

The present invention generally relates to a wireless input device assembly for a computer or a computer-controlled system and more specifically to a remotely powered wireless input device.

Wireless input devices, such as keyboards or computer mice, for use with personal computers are known. Specifically, wireless infrared keyboards for use with personal computers are known. An infrared wireless keyboard simply uses an infrared transmitter in the keyboard and an infrared receiver coupled to a personal computer to establish an input link from the keyboard to the personal computer.

The infrared wireless keyboard, however, has numerous drawbacks. Specifically, the infrared wireless keyboard requires a clear line-of-sight between the infrared transmitter in the keyboard and the infrared receiver in the personal computer. Moreover, the distance between the infrared keyboard and the receiver must not be too great so that the infrared receiver in the personal computer cannot detect the infrared beam from the infrared transmitter of the wireless keyboard.

The clear line-of-sight and distance requirements constrain the flexibility that a user would desire with regard to a wireless device because an artificial limit is placed on the location and the distance that can exist between the infrared wireless keyboard and the personal computer. In addition, the infrared wireless keyboard has large power consumption requirements because of the infrared transmitter. This large power consumption reduces overall battery life so that the batteries must be replaced or recharged more often.

In order to overcome these drawbacks of the infrared wireless input devices, the document WO-A-99/14861 discloses a low power radio-frequency (RF) wireless keyboard. The keyboard comprises an integrated RF transmitter and an antenna loop for generating RF signals which are relayed to an RF receiver associated with the personal computer. The disclosed RF wireless keyboard does no longer require a clear line-of-sight between the RF antenna in the keyboard and the receiver associated with the computer. However, and although power consumption is reduced with respect to common infrared wireless devices, the keyboard disclosed in WO-A-99/14861 still needs to be powered by batteries with their inherent drawbacks.

### Object of the invention

The object of the present invention is to provide an improved wireless input device assembly.

### General description of the invention

This object is achieved by a wireless input device assembly for a computer or a computer controlled system according to claim 1. This wireless input device assembly for a computer controlled system comprises
an exciter/receiver unit associated with said computer controlled system, said exciter/receiver unit comprising an oscillator means for generating an excitation signal, at least one transmitting antenna connected to said oscillator means for receiving said excitation signal and for generating an electromagnetic field corresponding to said excitation signal, at least one receiving antenna for receiving an electromagnetic field, and decoding means connected to said receiving antenna for receiving and decoding a signal from said receiving antenna, and
an input device comprising at least one element for generating data to be inputted into said computer controlled system, and at least one resonator circuit associated to said at least one element, said resonator circuit for influencing an electromagnetic coupling between said transmitting antenna and said receivi ng antenna in accordance with data generated by said at least one element.

The oscillator generates e.g. an AC current that, after amplification, is sent through the transmitting antenna. The resulting electromagnetic field is exciting the resonator circuit so that the resonator is supplied with power. The resonator then modulates the signal and accordingly transmits information about the data to be transferred to the computer to the receiving antenna. This information may then be extracted by a demodulator from the voltage induced in the receiving antenna.

It will be noted that the receiving of the modulated field may optionally be achieved with the transmitting antenna. In this case, the transmitting antenna and the receiving antenna are e.g. comprised of the same antenna loop.

If an AC I is sent through the transmitter antenna, this current generates a magnetic field, which in turn induces a voltage in the resonator coil. The resonator circuit is powered by the energy provided by the magnetic field. The resonator information message is modulated onto the current in the resonator coil (function f"). Thus, the resulting magnetic field B is the superposition of the original transmitter field and the modulated field generated by the resonator. The voltage U induced in the receiving antenna Rx is a function of the resulting field. The resonator information is extracted by demodulation of U.

In contrast to the known wireless input devices, the input device of the present invention is powered by the excitation field of the exciter/receiver unit, i.e. it uses energy which is emitted by the exciter/receiver unit. It follows that there is no more need to power the input device by batteries.

It will be noted that the wireless input device may operate at very low excitation fields, thus ensuring that the radiation does not constitute a source of interference with other equipment.

In a very simple embodiment of the invention, the resonator circuit comprises means for switching a resonant frequency of the resonator circuit. Such a simple modulation may be suitable for simple input devices allowing only a limited number of different input commands. The switching of the resonant frequency may e.g. be achieved by connecting one ore more capacitors into a resonant circuit. It will be noted that such modulation of the electromagnetic coupling consumes practically no energy and is therefore especially well suited for remotely powered input devices.

In a more sophisticated embodiment of the invention, said resonator comprises means for modulating said electromagnetic coupling with a binary sequence indicative of said data to be inputted into said computer controlled system. The modulation of the electromagnetic coupling by a binary sequence enables the transmission of a much larger number of different commands. It is thus possible to implement entire computer keyboards with more than hundred different keys. Furthermore this embodiment enables the transmission of the data with a redundant encoding.

A reliable wireless input device should be protected against electromagnetic interference. Accordingly there must be a clear differentiation between resonator signals and noise sources such as monitors, cellular phones, etc.. The signal and field strength being very low, the required immunity against electromagnetic interference may be obtained by a sophisticated modulation and the transmission of a binary message, which assures an unmistakable detection of the resonator.

Furthermore, since the modulation and the information transmitted by the resonator are in a known temporal relationship with the excitation field, it is possible to use synchronous detection methods in order to improve the signal/noise ratio. The resonator circuit may e.g. comprise means for modulating a resonant frequency with a subcarrier frequency synchronous with an exciting frequency of the electromagnetic field generated by said transmitting antenna. Such modulation of the electromagnetic coupling by a synchronous subcarrier frequency serves to render the interpretation of the signal more unique and more reliable. It will be noted that the synchronous subcarrier frequency can advantageously be provided by a frequency divider comprised in the electronic modulation circuit means and acting directly or via a second oscillator on a capacitor of the resonant circuit. It will be noted that different subcarriers may be used for different input devices operating simultaneously in the same excitation field. The different subcarrier frequencies enable the demodulating system to distinguish between the signals from the different input devices. It is thus possible, to operate e.g. a keyboard and a computer mouse within the same excitation field.

Furthermore, in order to reduce the influence of the tolerance of the electronic components and eliminate phase-cancellation phenomena, the excitation frequency may be varied periodically within a band of predetermined frequencies.

It should be noted that the above described principle for remotely transmitting information has been known for several years in the automotive field for detecting the presence and/or the orientation of an auxiliary child seat on a passenger seat. Reference is made to US patent US-A-5,851,026 and to the article "Situation Appropriate Airbag Deployment: Child Seat Presence and Orientation Detection (CPOD)", Thierry Goniva, published in "Advanced Microsystems For Automotive Applications 98", D. Ricken, W. Gessner (Eds.), ISBN 3-540-64091-6.

This automotive application has proven that the underlying principle is extremely reliable and efficient in fulfilling the very high standards which are typical for security critical applications.

In a possible embodiment of the invention, said input device is a keyboard and wherein said at least one element is a key of said keyboard. The data to be transmitted to the computer system will correspond to information about the actuation of said key. The keyboard can typically comprise a plurality of keys and an identification circuit for identification of an actuation of one or more of said plurality of keys. The identification circuit generates a signal as a function of a single activated key or of a group of several activated keys. This signal is then used by said resonator for modulating said electromagnetic coupling between said transmitting antenna and said receiving antenna.

In an alternative embodiment, said input device is a computer mouse or trackball and wherein said at least one element is a mouse button and/or a mechanical or an optical motion detector of said mouse or trackball. In this embodiment, an identification circuit of the mouse generates a signal corresponding to the motion and the status of the mouse buttons in order to mod u-late the electromagnetic coupling.

It will be noted, that the exciter/receiver unit may be integrated into the computer or the computer controlled system. However a complete integration of the exciter /receiver unit including the antennas usually will limit the maximum dimension of the antennas and thus reduce the working range of the input device. In a preferred embodiment, at least the transmitting and receiving antennas are arranged outside of the computer. The antennas may e.g. be integrated into a pad for placing in the vicinity of the input device. This embodiment ensures an enhanced flexibility with respect to the configuration of the antennas.

In a most preferred embodiment of the invention, the said transmitting antenna and/or said receiving antenna are integrated into a surface on which said input device is used. This surface may e.g. be a table board of a desk or working table or an operator panel of a computer controlled system. This embodiment advantageously reduces the number of components required in the operating area of the computer-controlled device. Furthermore the antennas are protected from mechanical destruction.

Each antenna may e.g. comprise an antenna loop integrated at the periphery of said table board or operator panel, such that the entire surface of the desk or operator panel is covered by the excitation field. The input device may thus be used at any location on the operating board or desk. Accordingly this embodiment results in a high flexibility with respect to the operation of the input device.

It will be noted, that the transmitting and/or receiving antenna may be simply arranged at a lower surface of the table board or operator panel. In a more preferred embodiment, said antennas are however integrated into the table board so that a mechanical protection of the antennas is ensured.

It will further be appreciated, that the present invention also relates to a computer system comprising a computer and at least one wireless input device, wherein said wireless input device is a remotely powered input device. Said computer system further comprises an RF exciter/receiver unit having at least one RF antenna, said antenna being integrated into a table board of a working table on which said wireless input device is to be operated. The wireless input device and said RF exciter/receiver unit preferably form a wireless input device as described herein above.

A further aspect of the present invention relates to a working table for operating a computer or a computer controlled system. The working table comprises a table board with at least one RF antenna, said antenna being connectable to an exciter/receiver unit of a wireless input device assembly comprising a remotely powered input device.

## Claims

1. Wireless input device assembly for a computer or a computer controlled system, comprising
an exciter/receiver unit associated with said computer controlled system, said exciter/receiver unit comprising an oscillator means for generating an excitation signal, at least one transmitting antenna connected to said oscillator means for receiving said excitation signal and for generating an electromagnetic field corresponding to said excitation signal, at least one receiving antenna for receiving an electromagnetic field, and decoding means connected to said receiving antenna for receiving and decoding a signal from said receiving antenna, and
an input device comprising at least one element for generating data to be inputted into said computer controlled system, and at least one resonator circuit associated to said at least one element, said resonator circuit for influencing an electromagnetic coupling between said transmitting antenna and said receiving antenna in accordance with data generated by said at least one element.

2. Wireless input device assembly according to claim 1, wherein said resonator circuit comprises means for switching a resonant frequency of the resonator circuit.

3. Wireless input device assembly according to claim 1 or 2, wherein said resonator comprises means for modulating said electromagnetic coupling with a binary sequence indicative of said data to be inputted into said computer controlled system.

4. Wireless input device assembly according to any one of claims 1 to 3, wherein said resonator circuit comprises means for modulating a resonant frequency with a subcarrier frequency synchronous with an exciting frequency of the electromagnetic field generated by said transmitting antenna.

5. Wireless input device assembly according to any one of claims 1 to 4, wherein said input device is a keyboard and wherein said at least one element is a key of said keyboard.

6. Wireless input device assembly according to any one of claims 1 to 5, wherein said input device is a keyboard comprising a plurality of keys and a identification circuit for identification of an actuation of one or more of said plurality of keys, said circuit generating a signal as a function of a single activated key or of a group of several activated keys, said resonator modulating said electromagnetic coupling between said transmitting antenna and said receiving antenna with said signal generated by said identification ci r-cuit.

7. Wireless input device assembly according to any one of claims 1 to 4, wherein said input device is a computer mouse and wherein said at least one element is a mouse button and/or a mechanical or an optical motion detector of said mouse.

8. Wireless input device assembly according to any one of claims 1 to 7, wherein said transmitting antenna and/or said receiving antenna are integrated into a surface on which said input device is used.

9. Wireless input device assembly according to claim 8, wherein said surface is a table board of a desk or working table.

10. Computer system comprising a computer and at least one wireless input device, wherein said wireless input device is a remotely powered input device, said computer system further comprising an RF exciter/receiver unit having at least one RF antenna, said antenna being integrated into a table board of a working table on which said wireless input device is to be operated.

11. Computer system according to claim 10, wherein said wireless input device and said RF exciter/receiver unit form a wireless input device according to any one of the claims 1 to 9.

12. Working table for operating a computer or a computer controlled system, comprising a table board with at least one RF antenna, said antenna being connectable to an exciter/receiver unit of a wireless input device assembly comprising a remotely powered input device.
